# DEMANDE DE BREVET EUROPEEN

(11) **EP 3 309 492 A1**
(43) Date de publication de la demande: **18.04.2018**
(21) Numéro de dépôt: 17194693.2
(22) Date de dépôt: 04.10.2017
(51) Int. Cl.: F28D 13/00, B01J 38/32, F22B 31/00

(54) **DISPOSITIF DE REFROIDISSEMENT D'UN SOLIDE CALOPORTEUR DESTINE A EN CONTROLER PRECISEMENT LA TEMPERATURE, ET PROCEDE ENDOTHERMIQUE OU EXOTHERMIQUE UTILISANT LEDIT DISPOSITIF**

(30) Priorité: 14.10.2016 FR 1659947
(71) Demandeur: AXENS, 92508 Rueil-Malmaison Cedex (FR)
(72) Inventeur: LE COZ, Jean-François, 78100 SAINT GERMAIN EN LAYE (FR); LE VOT, Yann, 75015 PARIS (FR)
(74) Mandataire: Schmitt, Nicolas A.J.

(57) **Abrégé**

La présente invention décrit un dispositif permettant un refroidissement contrôlé d'un solide caloporteur apportant ou soustrayant ses calories à une unité mettant en oeuvre des réactions globalement endothermiques ou respectivement exothermiques. Le faisceau d'échange dudit dispositif présente un pas triangulaire.

## Description

La présente invention concerne un échangeur de chaleur destiné à refroidir un solide catalytique ou non, ce solide jouant le rôle de solide caloporteur. L'échangeur de chaleur, objet de l'invention, est donc relié au procédé par au moins une conduite. Dans une première configuration une conduite d'amenée du solide « chaud » depuis l'unité mettant en oeuvre le procédé vers l'échangeur, et une conduite de retour du solide « froid » depuis l'échangeur vers cette même unité font que l'échangeur est traversé par un flux de solide. L'échangeur peut également être en communication avec un réservoir de solide fluidisé au moyen d'une seule conduite à travers laquelle un aller et retour de catalyseur s'effectue par mélange turbulent entre l'échangeur et le réservoir.

Le dit échangeur consiste essentiellement en un faisceau générateur de vapeur immergé au sein d'un lit fluidisé constitué de particules du solide à refroidir. Pour cette raison on appellera dans la suite du texte cet échangeur en lit fluidisé.

L'invention concerne plus particulièrement le domaine de la régénération d'un catalyseur opéré dans une unité en lit fluidisé et plus précisément le dispositif permettant le contrôle de la température dudit catalyseur prélevé en un point de la zone de régénération et renvoyé vers un autre point de ladite zone de régénération. Ce dispositif est appelé « catalyst cooler » selon la terminologie anglo-saxonne dans le contexte des unités de craquage catalytique. Compte tenu que la présente invention dépasse le cadre du craquage catalytique qui n'en constitue qu'un point d'application, le présent dispositif sera appelé dans la suite du texte échangeur sur solide en lit fluidisé, ou refroidisseur fluidisé.

Plus généralement, l'invention peut s'appliquer à tout solide caloporteur qui transporte ses calories vers une zone réactionnelle dans un procédé de transformation chimique ou physique, dont la température a besoin d'être contrôlée au moyen d'un échangeur générant de la vapeur.

L'invention concerne plus spécialement la régénération en lit fluidisé de catalyseurs particulièrement chargés en résidus hydrocarbonés et en coke, par suite d'une réaction avec une charge d'hydrocarbures lourds. Elle s'applique notamment à la régénération de catalyseurs d'hydrotraitement, de craquage catalytique ou d'hydrocraquage catalytique, de reformage, ou encore à la régénération de masses de contact pour craquage thermique, ou encore à la combustion par circulation de fluide (CFB). D'une manière générale, l'invention peut concerner tout type de procédé ayant besoin d'un solide caloporteur, que ce procédé soit lui-même endo ou exothermique, et impliquant un solide mis en oeuvre à l'état fluidisé.

Les procédés de craquage au cours desquels des molécules d'hydrocarbures à haut poids moléculaire et à point d'ébullition élevé sont scindées en molécules plus petites dont les températures d'ébullition sont plus faibles, sont en majorité des procédés catalytiques.

Parmi ces procédés, le procédé le plus couramment utilisé en raffinerie est le procédé de craquage catalytique en lit fluidisé (en anglais Fluid Catalytic Cracking), noté en abrégé FCC. Dans ce type de procédé, la charge d'hydrocarbures est simultanément vaporisée et mise en contact à haute température avec un catalyseur de craquage, qui est maintenu en suspension dans les vapeurs de la charge. Après avoir atteint par craquage la gamme de poids moléculaires désirée, avec un abaissement correspondant des points d'ébullition, le catalyseur est séparé des produits obtenus.

Dans ce type de procédé, les réactions de craquage interviennent de façon quasi instantanée lors de la mise en contact de la charge avec le catalyseur. Toutefois, il en résulte une désactivation rapide du catalyseur du fait de l'adsorption des hydrocarbures à la surface du catalyseur, et de la formation d'un dépôt de coke sur les sites actifs du catalyseur par déshydrogénation et condensation des molécules lourdes. La réactivation nécessaire du catalyseur est effectuée dans un premier temps en continu par stripage du catalyseur, par exemple au moyen de vapeur d'eau ou de gaz inerte, puis dans un second temps en éliminant tout ou partie du coke formé au cours de la réaction au moyen d'une combustion contrôlée, généralement en présence d'air qui peut être appauvri en oxygène. Cet air appauvri en oxygène est essentiellement utilisé dans certains procédés dont le catalyseur est très sensible à des températures élevées.

Le catalyseur régénéré est ensuite généralement soutiré depuis le régénérateur, puis recyclé vers la base du réacteur, appelé "riser" dans une unité FCC selon la terminologie anglo-saxonne, dans lequel se produit la réaction de craquage, le catalyseur et les effluents étant en écoulement vertical ascendant.

Le procédé FCC est naturellement mis en oeuvre de façon que l'unité de craquage soit en équilibre thermique. Autrement dit, l'énergie apportée par le catalyseur chaud régénéré permet de satisfaire les divers besoins thermiques de la section réactionnelle, à savoir principalement : le préchauffage de la charge liquide, la vaporisation de cette charge, l'apport de calories exigé par les réactions de craquage qui sont globalement endothermiques, et la compensation des pertes de chaleur de l'unité.

Des échangeurs internes à la zone de régénération ont été proposés dans le passé, mais l'usage d'un échangeur externe à ladite zone de régénération est préféré car il présente plusieurs avantages. Le terme externe doit être compris comme externe à la zone de régénération.
L'usage d'un échangeur de chaleur externe, de type échangeur sur solide en lit fluidisé, permet de refroidir le catalyseur prélevé dans la zone de régénération et de beaucoup mieux contrôler sa température avant sa réinjection dans ladite zone.
Un autre avantage d'un échangeur externe par rapport à un échangeur situé dans la zone de régénération est de travailler dans un lit fluidisé moins turbulent que dans le lit du régénérateur, ce qui permet d'avoir des conditions moins sévères du point de vue de l'abrasion. Une fluidisation à vitesse plus modérée permet l'usage de tubes en acier nus non recouverts de protection anti-abrasive.

Un échangeur externe permet d'avoir une fluidisation spécifique et ainsi de contrôler le coefficient d'échange thermique indépendamment du reste de l'installation.

De nombreux brevets décrivent des dispositifs externes ou intégrés à la zone de régénération de type échangeur sur solide en lit fluidisé, en particulier les brevets US 2970117, US 4396531, US 4822761, qu'on peut considérer comme faisant partie de l'arrière-plan technologique.

Le brevet US 5,351,749 décrit un « cat cooler» permettant de contrôler la température d'un catalyseur pendant sa régénération et utilisable avec un régénérateur d'un procédé de craquage catalytique de type FCC. L'arrangement du dispositif selon la présente invention se distingue principalement de celui décrit dans le texte cité en ce que les épingles de refroidissement situées dans l'échangeur sur solide en lit fluidisé présentent, selon une coupe horizontale, un motif triangulaire, et en ce que la forme des chambres de distribution et de collecte (appelé « manifold » selon la terminologie anglo-saxonne) du fluide de refroidissement a également une géométrie différente.

Le brevet FR 2932495 décrit une unité de craquage catalytique comprenant deux réacteurs à écoulement ascendant du catalyseur (appelé « riser » selon la terminologie anglo-saxonne), un premier réacteur dédié à la production d'essence, et un second à la production de propylène. Chacun de ces réacteurs est alimenté par du catalyseur issu d'un échangeur sur solide en lit fluidisé dédié, afin de régler de manière indépendante la température et le temps de contact dans les deux réacteurs.

Ce brevet ne décrit pas avec précision l'arrangement des échangeurs sur solide en lit fluidisé, notamment la forme du faisceau d'échange.

Le brevet US 4,965,232 décrit un procédé de régénération en lit fluidisé, opéré en continu, dans lequel une partie du catalyseur en provenance de la seconde zone de régénération est envoyée dans un échangeur de chaleur qui peut être externe à la régénération. Cet échangeur n'est pas spécifié et peut être de tout type connu de l'homme du métier.

La présente invention décrit une géométrie de refroidisseur en lit fluidisé qui permet une meilleure compacité et limite les risques de mouvement des épingles constituant l'échangeur sous l'effet de la fluidisation.

En particulier, l'échangeur sur solide en lit fluidisé selon la présente invention peut parfaitement être utilisé dans une unité de craquage catalytique possédant un ou deux « risers » ou même des réacteurs en écoulement descendant appelés « down-flow reactor » selon la terminologie anglo-saxonne. De manière générale, le présent échangeur en lit fluidisé peut être utilisé dans tout procédé ayant besoin d'un solide caloporteur et communiquant avec la zone réactionnelle à l'état fluidisé.

### DESCRIPTION SOMMAIRE DES FIGURES

La figure 1 selon l'art antérieur décrit schématiquement la liaison entre le régénérateur, par exemple d'une unité de craquage catalytique, avec l'enceinte appelé échangeur sur solide en lit fluidisé.
Les figures 2 à 5 décrivent plus en détail l'échangeur sur solide en lit fluidisé selon l'invention :

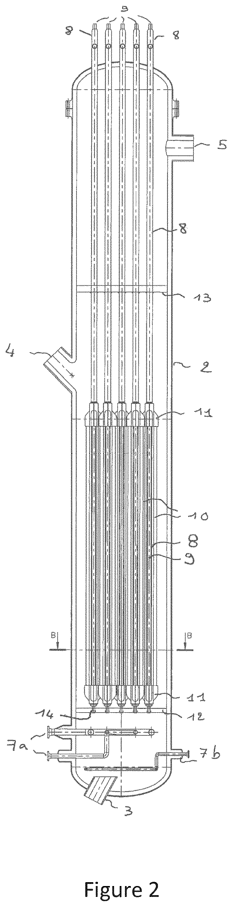

   La figure 2 représente une coupe longitudinale de l'intérieur de l'échangeur sur solide en lit fluidisé avec son réseau de tubes d'échange.

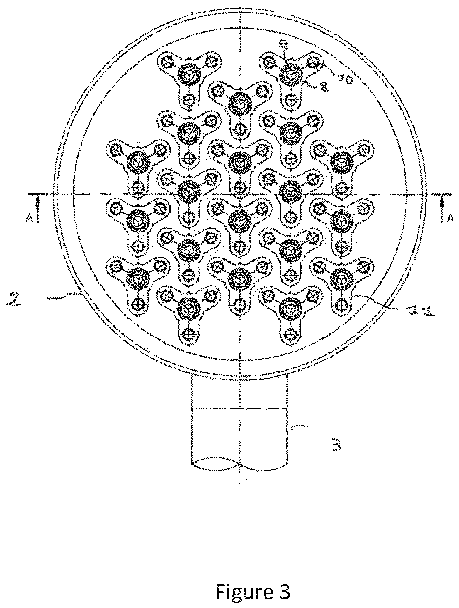

La figure 3 représente une coupe de l'échangeur sur solide en lit fluidisé selon l'axe BB de la figure 2, et permet de visualiser l'organisation de l'échangeur en pas triangulaire.

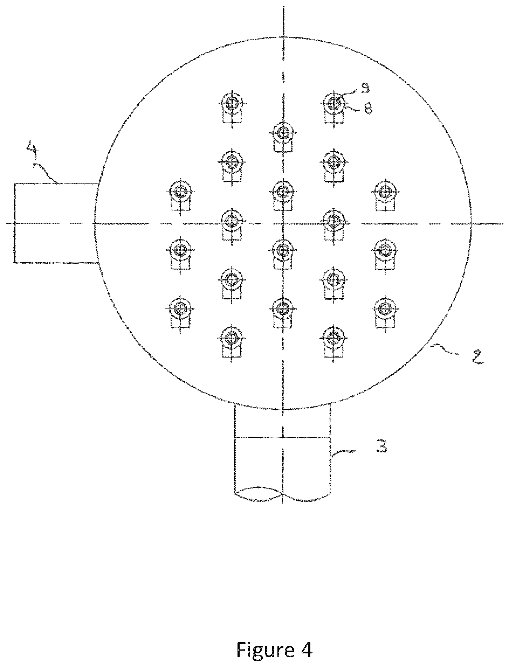

La figure 4 représente une vue de dessus de l'échangeur sur solide en lit fluidisé qui complète la figure 3.

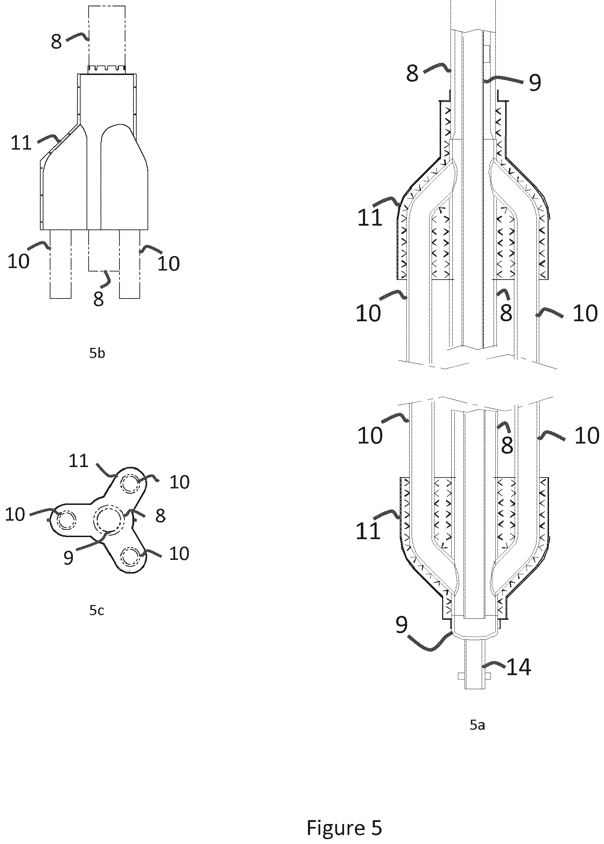

La figure 5 fournit des détails concernant les modules protecteurs (11) et les connexions entre les tubes de l'échangeur en vue de coupe (figures 5a et 5b et 5c).

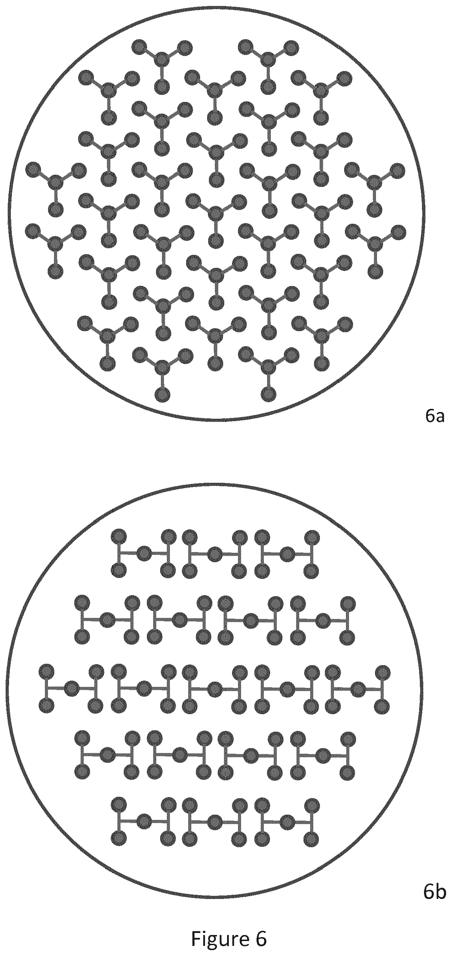

La figure 6 montre une vue en coupe de l'échangeur selon l'invention (6a) et selon l'art antérieur (6b) pour un même diamètre intérieur.

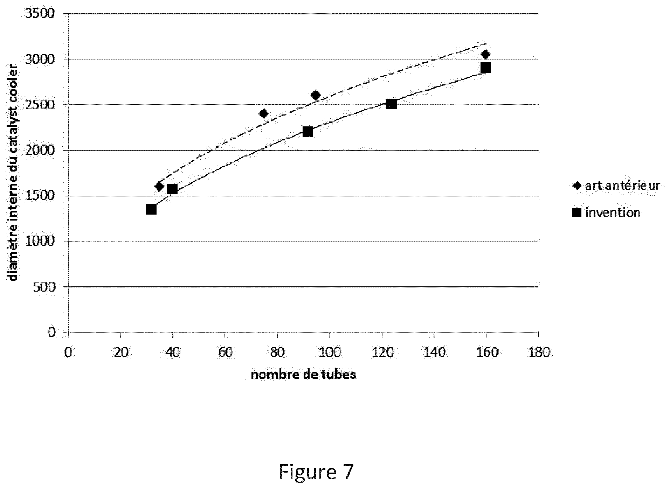

La figure 7 compare l'efficacité de la géométrie d'un échangeur en lit fluidisé selon l'invention avec celui selon l'art antérieur.

### DESCRIPTION SOMMAIRE DE L'INVENTION

La présente invention peut se définir comme un dispositif permettant un échange de chaleur contrôlé d'un solide caloporteur apportant ses calories à une unité mettant en oeuvre des réactions globalement endothermiques, ou à l'inverse, soustrayant des calories à une unité mettant en oeuvre des réactions globalement exothermiques.
Plus précisément, le présent dispositif permet de contrôler la température du solide caloporteur avant sa réintroduction dans la zone réactionnelle du dit procédé.
Le dispositif selon la présente invention consiste en un faisceau d'échange permettant la génération de vapeur d'eau, ledit faisceau étant immergé au sein d'un lit fluidisé du solide, et ledit lit fluidisé étant contenu dans une enceinte communiquant avec la zone réactionnelle du procédé par au moins une conduite d'introduction du solide « chaud » (4).
Dans certains cas le dispositif immergé dans l'enceinte fluidisée communique avec la zone réactionnelle par deux conduites distinctes, une conduite d'introduction (4) du solide dans l'échangeur fluidisé, et une conduite d'évacuation du solide après échange (3).
Le faisceau d'échange du dispositif de refroidissement fluidisé selon l'invention est constitué d'un ensemble de tubes verticaux regroupés par 4, un tube central de type baïonnette (8) /(9) se divisant à son extrémité inférieure en 3 tubes (10) sensiblement parallèle au tube (8)/(9) et disposés de manière symétrique autour dudit tube baionnette (8)/(9) de manière à former en vue de dessus un ensemble symétrique en forme de trèfle.
On appelle l'ensemble constitué par le tube baïonnette (8)/(9) et les 3 tubes parallèles (10) le motif élémentaire du faisceau d'échange ou module du faisceau.

Le dispositif de refroidissement d'un solide caloporteur selon l'invention, possède donc un faisceau d'échange dans lequel les différents modules formé par le tube baïonnette (8)/(9) et les trois tubes de type (10), sont disposés en un pas triangulaire de façon à occuper le plus complément possible la section du dispositif de refroidissement.
La partie inférieure du module formé par le tube (8)/(9), et les 3 tubes (10) est préférentiellement équipée d'une enveloppe (11) mise en place autour des jonctions entre le tube (8) et les trois tubes (10) de façon à les protéger à la fois d'un point de vue thermique et mécanique.

L'enveloppe de protection (11) est préférentiellement garnie d'un matériau anti abrasion, auto-coulable et à forte densité.

La densité des ensembles de tubes (8)/(9) et des 3 tubes (10) est généralement comprise entre 10 et 40 unités/m2, préférentiellement entre 15 et 30 unités/m2, et plus préférentiellement comprise entre 20 et 25 unités/m2 de section du refroidisseur.

Le diamètre du tube central (9) est préférentiellement compris entre 30 et 150 mm, et plus préférentiellement compris entre 50 et 75 mm, et le diamètre des tubes (8) et (10) est préférentiellement compris entre 40 et 200 et plus préférentiellement compris entre 75 et 125 mm. On parle ici des diamètres extérieurs de ces tubes (8) (9) et (10).

Le dispositif selon la présente invention peut être utilisé dans un procédé de génération de vapeur dans lequel l'eau liquide est introduite par l'extrémité supérieure des tubes centraux (9), descend jusqu'au bas de ces tubes, et le mélange eau/ vapeur remonte le long du tube coaxial (8) et des trois tubes parallèles (10).

Le dispositif selon la présente invention peut être utilisé dans un procédé dans lequel la température du refroidisseur fluidisé en entrée est comprise entre la température saturante de la vapeur à la pression de la vapeur à produire, et la température maximale admissible par la métallurgie des tubes d'échanges. A titre d'illustration, lorsque la température saturante de la vapeur haute pression à 4,5 MPa avoisine 260°C, le catalyseur sera nécessairement à une température supérieure à 260°C.

L'invention n'impose intrinsèquement pas de limite de température supérieure, seule la métallurgie des tubes conduit à une borne supérieure. En craquage catalytique, une température de 815°C est généralement considérée comme température maximale admissible.

Le dispositif selon la présente invention peut également être utilisé dans un procédé de craquage catalytique de coupes hydrocarbonées dans lequel la vitesse de fluidisation dans l'enceinte de refroidissement est comprise entre 0,05 et 0,5 m/s et préférentiellement comprise entre 0,1 et 0,3 m/s.

### DESCRIPTION DETAILLEE DE L'INVENTION

La présente invention concerne un dispositif de contrôle de la température d'un catalyseur, ou de manière plus générale, d'un solide divisé en une multiplicité de particules à l'état fluidisé, ainsi que l'utilisation de ce dispositif dans un procédé catalytique ou non, dans lequel la régénération dudit solide est opérée en lit fluidisé.

La présente invention peut donc se définir comme un dispositif permettant un échange de chaleur contrôlé d'un solide caloporteur apportant ses calories à une unité mettant en oeuvre des réactions globalement endothermiques, ou à l'inverse, soustrayant des calories à une unité mettant en oeuvre des réactions globalement exothermiques.

Le dispositif et le procédé selon l'invention peuvent en particulier être mis en oeuvre lors de la régénération de catalyseurs d'hydrotraitement d'hydrocarbures, de reformage catalytique, d'isomérisation des paraffines ou des oléfines, de production d'aromatiques à partir de bromure de méthyle, de production de xylène par méthylation du toluène, de craquage catalytique ou d'hydrocraquage catalytique, ou encore pour la régénération de masses de contact pour craquage thermique, ou bien encore pour combustion en lit fluidisé ou en lit circulant. La suite du texte est rédigée dans le contexte d'une unité de craquage catalytique prise à titre d'exemple, sans que cela constitue une limitation vis-à-vis du champ d'application de la présente invention.

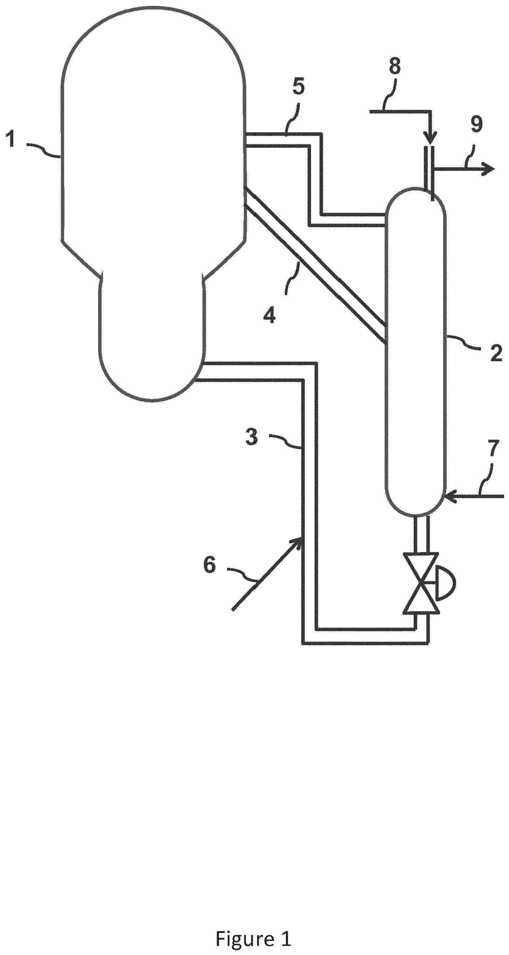

La description de l'invention est appuyée sur les figures 1 à 7.

La figure 1 selon l'art antérieur décrit un schéma de principe dans lequel l'échangeur sur solide en lit fluidisé (2) est associé à un régénérateur (1). Dans un procédé de craquage catalytique, la réaction de craquage a lieu dans un riser (terminologie correspondant à un réacteur fonctionnant en courant ascendant du catalyseur en lit fluidisé) ou un dropper (terminologie correspondant à un réacteur fonctionnant en courant descendant du catalyseur fluidisé). Après la zone réactionnelle, on trouve une zone de désengagement permettant de séparer le catalyseur des effluents de craquage gazeux. Le catalyseur coké est envoyé vers le régénérateur (1). En effet, au cours des réactions de craquage un dépôt de coke se forme à la surface du catalyseur et lui fait perdre son activité. Le catalyseur doit donc être régénéré avant sa réintroduction dans le réacteur.

Cette régénération consiste essentiellement en une combustion contrôlée du coke déposé à la surface du catalyseur. Pendant la régénération la température du catalyseur est au minimum de 650°C et peut s'élever jusqu'à des températures de l'ordre de 800 à 900°C et, les calories apportées par le catalyseur sont utilisées à la vaporisation de la charge hydrocarbonée et aux réactions de craquage endothermiques. Néanmoins il arrive dans le cas de charges lourdes que le bilan thermique de l'unité laisse un excédent de calories par rapport aux besoins de l'unité.

La zone (2) d'échange de chaleur contenant l'échangeur sur solide en lit fluidisé permet d'évacuer l'excédent de chaleur en produisant généralement de la vapeur haute pression. Le catalyseur fluidisé et chaud est envoyé vers l'échangeur sur solide en lit fluidisé via la conduite (4) et retourne après refroidissement via la conduite (3) vers le régénérateur, transporté par un gaz de convoyage alimenté via la conduite (6) qui permet de fluidiser et d'entrainer le catalyseur vers ledit régénérateur (1). Il peut aussi être dirigé vers d'autres parties de l'installation, par exemple le riser. La conduite (7) permet d'alimenter en gaz l'échangeur sur solide en lit fluidisé (2), afin de fluidiser le catalyseur dans l'enceinte (2).

La température du lit de solide dans l'échangeur est régulée au moyen du débit de solide traversant l'équipement au moyen d'une vanne de restriction placée en position basse sur la conduite (6). La conduite (5) permet d'évacuer le gaz de fluidisation de l'échangeur sur solide en lit fluidisé (2) et de l'envoyer vers le régénérateur (1). Les tubes (8), (9) et (10) permettent d'alimenter le faisceau d'échange immergé au sein du lit fluidisé par de l'eau et de récupérer le mélange eau/vapeur en sortie d'échangeur.

L'échangeur sur solide en lit fluidisé (2) selon une réalisation de l'invention est localisé à l'extérieur de la zone de régénération (1) et communique avec celle-ci au moyen des conduites (3) et (4) telles que décrites plus haut.

L'invention consiste en un arrangement particulier de l'échangeur sur solide en lit fluidisé, et en particulier du faisceau de l'échangeur interne immergé au sein du lit fluidisé. Cet échangeur interne se présente sous la forme d'un faisceau de tubes étendus selon un axe sensiblement vertical tout au long de l'enceinte (2), les tubes étant de deux types, soit des tubes simples (10), soit des tubes doubles, dit baïonnette présentant un tube interne (9) et un tube concentrique externe (8) entourant le tube interne (9). Le tube interne (9) est utilisé pour la descente du liquide et la partie annulaire comprise entre les deux tubes concentriques (8) et (9) est utilisée pour la remontée du mélange liquide/vapeur. Dans la suite du texte, par simplification, on parlera de tube baïonnettes (8)/(9), sachant que c'est la partie annulaire de ce tube qui sert à la remontée du mélange liquide/vapeur.

La figure 2, selon l'invention, présente une vue en coupe de l'échangeur sur solide en lit fluidisé (2) sur toute sa longueur et permet de visualiser l'échangeur interne selon l'invention. Le catalyseur chaud issu du régénérateur arrive dans l'échangeur sur solide en lit fluidisé par la conduite (4) à une température généralement comprise entre 650°C et 800°C. A l'intérieur de l'échangeur sur solide en lit fluidisé (2), le faisceau de tubes (8, 9,10) réalise l'échange de chaleur. L'échangeur selon l'invention présente généralement un diamètre compris entre 0,5 et 10 mètres, de préférence entre 1 et 5 mètres.

L'ensemble formé par un tube baïonnette (8)/(9) et les 3 tubes (10) constitue le motif modulaire du faisceau d"échange comme cela sera expliqué plus en détail sur les figures 3, 4 et 5 suivantes. On l'appelle de manière simplifiée module du faisceau d'échange.

Le tube interne (9) est utilisé pour la descente du liquide, et la partie annulaire comprise entre les deux tubes concentriques (8) et (9) est utilisé pour la remontée du mélange liquide/vapeur.

Ces tubes (8) et (10) sont reliés entre eux en certains points, par exemple par soudage, et ces connexions forment des collecteurs qui sont protégées par des dispositifs décrits sur la figure 5. Le piton (14) soudé en partie basse de chaque module du faisceau d'échange sert à la fois à fermer l'extrémité des tubes (9) et à suspendre un premier ensemble de barres triangulées (12) reliant entre eux les modules du faisceau d'échange de manière lâche, ceci pour amortir les déplacements selon une direction sensiblement horizontale des tubes, et éviter que les tubes des différents modules du faisceau ne rentrent en collision les uns contre les autres, ou qu'ils ne viennent heurter la paroi de l'enceinte de l'échangeur en lit fluidisé (2).

Un deuxième ensemble de barres triangulées (13) situé à un niveau supérieur par rapport au premier ensemble (12), permet également de limiter les vibrations des tubes dans un plan horizontal, et donc de les maintenir à distance toujours sensiblement constante les uns des autres.

Les entrées 7a et 7b permettent d'admettre de l'air, de la vapeur d'eau, (ou un quelconque gaz inerte) servant de gaz de de fluidisation aux particules de catalyseur de manière à maintenir le lit de catalyseur dans un état fluidisé qui permet de garantir qu'il ne se tasse pas, et facilite son écoulement vers la sortie (3). Généralement la vitesse de fluidisation calculée comme le rapport du débit de fluidisation sur la section libre de l'échangeur se situe entre 0,05 et 0,5 m/s, et préférentiellement entre 0,1 et 0,3 m/s.

Le débit de gaz introduit par les entrées 7a et 7b permet également une modulation de la vitesse de fluidisation, et donc la régulation du coefficient d'échange thermique entre le lit de catalyseur et le faisceau d'échange. Le catalyseur fluidisé refroidi est renvoyé au régénérateur via la conduite (3).

La figure 3, selon l'invention, présente une vue en coupe de l'échangeur en lit fluidisé (2) selon l'axe BB de la figure 2. La figure 3 permet de bien comprendre l'organisation des tubes 8, 9 et 10.
L'eau descend depuis l'extrémité supérieure des tubes (9) jusqu'à l'extrémité inférieure dudit tube et remonte à l'état liquide vapeur par le tube concentrique externe (8) et les 3 tubes (10). Le pas d'un ensemble contigu de tubes (8), (9), (10) est triangulaire, et le pas des différents tubes baïonnettes (8/(9) est également triangulaire. Cette configuration assure une compacité maximale du faisceau d'échange.

La figure 4, selon l'invention, est une vue de dessus de l'échangeur en lit fluidisé, située au-dessus de l'enveloppe (2), et permet de comprendre comment est agencé l'extrémité supérieure des tubes baïonnettes (8)/(9). Le mélange eau/vapeur circulant de manière ascendante dans la partie annulaire comprise entre les tubes concentriques (8) et (9) est acheminé dans un T, les différents T pouvant ensuite être reliés entre eux en une ou plusieurs étapes pour constituer la conduite de sortie de la vapeur produite.

La figure 5, selon l'invention, illustre plusieurs détails de réalisation concernant les enveloppes (11).

La figure 5a permet de comprendre la sortie du liquide à l'extrémité inférieure d'un tube (9) puis la remontée du mélange liquide/vapeur d'une part dans la partie annulaire définie par les deux tubes concentriques (8) et (9), et d'autre part dans les 3 tubes de remontée (10).

A partir de l'extrémité inférieure ouverte d'un tube de descente (9), l'eau se divise selon 4 circuits, le circuit de remontée annulaire (8), et 3 circuits de remontée par les 3 tubes (10) disposés en pas triangulaire autour du tube baïonnette (8)/(9).

Les figures 5b et 5c montrent le positionnement des enveloppes de protection supérieure et inférieure (11). Ces enveloppes ont à la fois un rôle anti-chauffe et anti abrasion de la zone de soudure des 3 tubes (10) autour du tube (8). Sur la figure 5c on voit que l'enveloppe de protection (11) protège non seulement l'extérieur des tubes (10), mais aussi la partie intérieure s'étendant entre les tubes (10) et le tube (8). Sur la figure 5c on voit également que les enveloppes (11) ont une forme symétrique en trèfle. Les 3 tubes (10) forment donc un pas triangulaire centré autour du tube baïonnette (8)/(9).

Ces enveloppes de protection (11) sont disposées à l'élévation inférieure et supérieure des jonctions entre tubes (10) et tube (8). Elles peuvent être réalisées au moyen d'un assemblage de plaque embouties et/ou soudées, et ont pour fonction de servir de moule pour être remplies d'un matériau ayant une fonction d'isolation thermique et de protection mécanique. Un exemple préféré de matériau est le béton réfractaire du même type que celui employé comme revêtement dans les unités de craquage catalytique dans la zone de régénération. Des exemples de tels matériaux sont le R-MAX MP de Resco ou l'Actchem 85, cette liste n'étant pas exhaustive.

On peut également utiliser pour le moulage des enveloppes de protection (11) un matériau fusible (polymère) qui fondra lors de la mise en route de l'installation, laissant le matériau réfractaire anti-abrasion apparent.

L'ensemble du tube baïonnette (8)/(9) et des 3 tubes de remontée (10) constitue un module du faisceau d'échange, le faisceau d'échange global étant constitué de la réunion des différents modules, et ces différents modules étant arrangés avec un pas triangulaire de manière à couvrir au mieux la section de l'échangeur en lit fluidisé.

L'arrangement en triangle des tubes de génération de vapeur selon l'invention permet d'obtenir une distribution spatiale des tubes optimale du point de vue de l'utilisation de la section de l'échangeur en lit fluidisé (2). Cet arrangement est montré sur la figure 6a, alors que la figure 6b montre un arrangement beaucoup moins compact selon l'art antérieur. L'utilisation d'un pas triangulaire à l'intérieur d'une section circulaire est beaucoup plus avantageuse que dans l'art antérieur où un motif carré ou rectangulaire génère des zones mortes très significatives dans les bords. Ces zones mortes conduisent à une perte d'efficacité, non seulement en raison de l'absence de tubes d'échange, mais aussi parce qu'elles laissent un passage libre. Il en résulte un passage préférentiel pour une fraction du catalyseur chaud qui peut facilement court-circuiter les faisceaux d'échange et retourner dans le régénérateur en étant de ce fait moins refroidi. L'invention permet ainsi de rendre plus homogène l'échange thermique et, au global, d'améliorer l'efficacité thermique et de faciliter l'écoulement du catalyseur.

En résumé, l'invention concerne un dispositif permettant un échange de chaleur contrôlé d'un solide caloporteur utilisé dans un procédé endothermique ou exothermique possédant au moins une zone réactionnelle, ledit dispositif consistant en un faisceau d'échange immergé au sein d'un lit fluidisé du solide, ledit lit fluidisé étant contenu dans une enceinte (2) communiquant avec la zone réactionnelle par au moins une conduite d'introduction du solide (4), et ledit faisceau d'échange étant constitué d'un ensemble de tubes longitudinaux regroupés par 4, un tube central de type baïonnette (8)/(9) se divisant à son extrémité inférieure en 3 tubes (10) sensiblement parallèles au tube (8)/(9) et disposés de manière symétrique autour dudit tube (8)/(9) de manière à former en vue de dessus un ensemble symétrique en forme de trèfle appelé module du faisceau d'échange.

De préférence, dans le dispositif selon l'invention les différents modules formé par le tube baïonnette (8)/(9) et les trois tubes de type (10), sont disposés selon un pas triangulaire de façon à occuper le plus complément possible la section du dispositif de refroidissement.

Selon une variante du dispositif selon l'invention, la partie inférieure de chaque module formé par le tube (8)/(9), et les 3 tubes (10) est équipée d'une enveloppe (11) mise en place autour des jonctions entre le tube (8) et les trois tubes (10) de façon à les protéger à la fois d'un point de vue thermique et mécanique.

De préférence, l'enveloppe (11) est réalisée dans un matériau anti abrasion, auto-coulable et à forte densité.

De préférence, la densité des modules formés des tubes (8)/(9) et des 3 tubes (10) est comprise entre 10 et 40 ensembles/m2 de surface du refroidisseur. De manière préférée le diamètre du tube central (9) est compris entre 30 et 150 mm, et le diamètre des tubes (8) et (10) est compris entre 40 et 200 mm.

Selon l'invention, de préférence ledit lit fluidisé de solide est contenu dans une enceinte (2) communiquant avec la zone réactionnelle par au moins une conduite d'introduction du solide (4), et au moins une conduite d'évacuation du solide (3).

L'invention concerne également un procédé de génération de vapeur, utilisant le dispositif selon l'invention, dans lequel l'eau liquide est introduite par l'extrémité supérieure des tubes centraux (9), descend jusqu'au bas de ces tubes, et le mélange eau/ vapeur remonte le long du tube coaxial (8) et des trois tubes parallèles (10).

L'invention concerne également un procédé endothermique ou exothermique mettant en oeuvre le dispositif selon l'invention.

De préférence, l'invention concerne un procédé de craquage catalytique de coupes hydrocarbonées mettant en oeuvre le dispositif selon l'invention. Dans ce cas, de manière plus préférée, la température du solide en entrée du refroidisseur est comprise entre 700 et 815°C, et la température du solide en sortie du refroidisseur est comprise entre 550 et 770°C et de préférence, la vitesse de fluidisation dans l'enceinte de refroidissement est comprise entre 0,05 et 0,5 m/s.

### EXEMPLE SELON L'INVENTION

Un exemple de dimensionnement est donné ci-dessous, pour un diamètre intérieur de l'échangeur de 2500 mm. Il s'agit de l'application de l'échangeur à une unité de craquage catalytique destiné au refroidissement contrôlé du catalyseur. Les figures 6a et 6b permettent de comparer les arrangements suivant l'invention et suivant l'art antérieur, pour un même pas de 400 mm entre les centres des modules de faisceaux de tubes.

La densité de tubes est nettement plus élevée avec l'échangeur selon l'invention. Il faut noter que la surface d'échange totale est plus importante avec le faisceau selon l'invention alors même que la surface d'échange par module est plus faible. Ceci provient de la meilleure densité, et donc du plus grand nombre de modules logés dans l'enceinte fluidisée de l'échangeur.

| | invention | art antérieur | |
|---|---|---|---|
| Diamètre interne de l'échangeur | 2500 | 2500 | mm |
| Température d'entrée du solide | 770 | 770 | °C |
| Température de sortie du solide | 620 | 620 | °C |
| Température du réfrigérant (eau liquide/vapeur) | 260 | 260 | °C |
| Nombre de tubes par module | 4 | 5 | |
| Longueur des tubes (mm) | 6300 | 6300 | mm |
| Diamètre externe des tubes périphériques | 75 | 75 | mm |
| Diamètre externe des tubes centraux | 120 | 120 | mm |
| Coefficient d'échange thermique | 460 | 460 | kW/(m2.K) |
| Surface d'échange d'un module | 6,8 | 8,3 | m2 |
| Nombre de modules dans le faisceau d'échange | 31 | 19 | |
| Surface d'échange totale | 211 | 158 | m2 |
| Puissance thermique | 36 | 27 | MW |
| Hauteur de l'échangeur | 15000 | 15000 | mm |

La figure 7 représente la variation du nombre de tubes qu'on peut disposer à l'intérieur de l'enceinte fluidisée de l'échangeur en fonction du diamètre de cette enceinte, et permet de comparer la configuration selon l'invention (courbe en trait plein) avec la courbe selon l'art antérieur (courbe en traits pointillés).
Elle illustre la meilleure compacité du faisceau selon l'invention, et ceci pour une gamme de diamètre de l'échangeur.

## Revendications

1. Dispositif d'échange de chaleur d'un solide caloporteur à l'état fluidisé permettant un échange de chaleur contrôlé d'un solide caloporteur utilisé dans un procédé endothermique ou exothermique possédant au moins une zone réactionnelle, ledit dispositif consistant en un faisceau d'échange immergé au sein d'un lit fluidisé du solide, ledit lit fluidisé étant contenu dans une enceinte (2) communiquant avec la zone réactionnelle par au moins une conduite d'introduction du solide (4), et ledit faisceau d'échange étant constitué d'un ensemble de tubes longitudinaux regroupés par 4, un tube de type baïonnette (8) /(9) comportant un tube central (9) et un tube (8) coaxial au tube (9) et entourant ce dernier, et 3 tubes (10) parallèles au tube baïonnette (8)/(9), et disposés de manière symétrique autour dudit tube (8)/(9), de manière à former en vue de dessus un ensemble symétrique en forme de trèfle, appelé module du faisceau d'échange.

2. Dispositif d'échange de chaleur d'un solide caloporteur à l'état fluidisé selon la revendication 1, dans lequel les différents modules formés par le tube baïonnette (8)/(9) et les trois tubes (10) parallèles au tube baïonnette (8)/(9), sont disposés selon un pas triangulaire de façon à occuper le plus complément possible la section dudit dispositif d'échange.

3. Dispositif d'échange de chaleur d'un solide caloporteur à l'état fluidisé selon la revendication 1, dans lequel la partie inférieure de chaque module formé par le tube baïonnette (8)/(9), et les 3 tubes (10) parallèles au tube baïonnette (8)/(9) est équipée d'une enveloppe (11) mise en place autour des jonctions entre le tube (8) coaxial au tube (9), et les trois tubes (10) parallèles au tube baïonnette (8)/(9), de façon à les protéger à la fois d'un point de vue thermique et mécanique.

4. Dispositif d'échange de chaleur d'un solide caloporteur à l'état fluidisé selon la revendication 3, dans lequel l'enveloppe (11) est réalisée dans un matériau anti abrasion, auto-coulable et à forte densité.

5. Dispositif d'échange de chaleur d'un solide caloporteur selon la revendication 1, dans lequel la densité des modules formés des tubes baïonnette (8)/(9) et des 3 tubes (10) parallèles au tube baïonnette (8)/(9), est comprise entre 10 et 40 par m2 de surface du dispositif d'échange de chaleur.

6. Dispositif d'échange de chaleur d'un solide caloporteur selon la revendication 1, dans lequel le diamètre du tube central (9) est compris entre 30 et 150 mm, et le diamètre du tubes (8) coaxial au tube (9), et des 3 tubes (10) parallèles au tube baïonnette (8)/(9), est compris entre 40 et 200 mm.

7. Dispositif d'échange de chaleur d'un solide caloporteur selon la revendication 1, dans lequel ledit lit fluidisé de solide est contenu dans une enceinte (2) communiquant avec la zone réactionnelle par au moins une conduite d'introduction du solide (4), et au moins une conduite d'évacuation du solide (3).

8. Procédé de génération de vapeur utilisant le dispositif d'échange de chaleur selon l'une quelconque des revendications 1 à 7, dans lequel l'eau liquide est introduite par l'extrémité supérieure des tubes centraux (9), descend jusqu'au bas de ces tubes, et le mélange eau/ vapeur remonte le long du tube coaxial (8) et des trois tubes parallèles (10).

9. Procédé de craquage catalytique de coupes hydrocarbonées utilisant le dispositif selon l'une quelconque des revendications 1 à 7.

10. Procédé de craquage catalytique selon la revendication 9, dans lequel la température du solide en entrée du dispositif d'échange de chaleur est comprise entre 700 et 815°C, et la température du solide en sortie du dispositif d'échange de chaleur est comprise entre 550 et 770°C.

11. Procédé de craquage catalytique selon la revendication 9, dans lequel la vitesse de fluidisation dans le dispositif d'échange de chaleur est comprise entre 0,05 et 0,5 m/s.
